# EUROPEAN PATENT APPLICATION

(11) **EP 3 828 425 A1**
(43) Date of publication of application: **02.06.2021**
(21) Application number: 20208380.4
(22) Date of filing: 18.11.2020
(51) Int. Cl.: F16B 7/04, F16B 2/06

(54) **ADJUSTABLE CLIP AND METHOD OF FASTENING COMPONENTS USING AN ADJUSTABLE CLIP**

(30) Priority: 27.11.2019 BR 102019024996
(71) Applicant: Daguano Romalho Monteiro, Ronaldo, 04044-010 São Paulo (BR)
(72) Inventor: Daguano Romalho Monteiro, Ronaldo, 04044-010 São Paulo (BR)
(74) Representative: Abel & Imray

(57) **Abstract**

The present invention relates to an adjustable clip and a method of fastening a component using an adjustable clip for use as a mechanical attachment component of mechanical elements having tubular, billet, spherical, or other similar and/or compatible shapes to be attached to elements from automatic systems such as transfer grippers or robot grips, but also as a component in machine assemblies, pipes, structural systems such as, for example, shelves or other type of furniture, or in any other type of application compatible with their characteristics of joining two or more mechanical elements.

## Description

The present application claims priority of Brazilian patent application no. BR102019024996-0 filed on November 27, 2019, as such the subject matter of said application is incorporated herein by cross-reference.

The present invention relates to an adjustable clip shaped as an eyeglass frame for use as a mechanical attachment component of mechanical elements having tubular, billet, spherical, or other similar and/or compatible shapes to be attached to elements from automated systems such as transfer grippers or robot grips, but also as a component in machine assemblies, pipes, structural systems such as, for example, shelves or other type of furniture, or in any other type of application compatible with their characteristics of joining two or more mechanical elements.

The present invention further relates to a method of fastening a component by means of an adjustable clip.

### Description of the State of the Art

Use of connecting clips of structural mechanical elements or components such as grippers, shovels, suction cups for handling and transporting parts in processes and which allow an easy and broad adjustment of these elements to the working positions is relatively common and there are many different concepts and models therefore.

There is a need for a product that meets the characteristics of being structurally stiff, lightweight, widely flexible and easy to adjust, being stable to maintain the adjusted conditions for many cycles with an intense dynamics but without any vibration, and that is relatively simple to result in a cost competitive product that does not limit the throughput of equipment where it is installed.

The state of the art clips are known to be inefficient in their installation, removal, and most importantly, they do not provide an a easy, precise, efficient and fast adjustment. Also, location of the clip as well as its position in the equipment where it is installed can often make it very difficult for the operator to handle it, thus making its assembly and adjustment in the proper position difficult.

Therefore, the state of the art fails to provide an apparatus (clip) having a configuration that would facilitate one to reach its fastening means (screws) and that would allow access for assembly and adjustment in the most optimized, simple, precise, efficient and fast way possible.

In this sense, the present inventor has been developing innovative clips for some time, testing and evaluating them in use over time to improve them. He has recently developed a new concept and model that is characterized by being simple (it has 2 separate parts and screws), easy to use, stiff and lightweight.

### Objects of the Invention

An object of the present invention is to provide a clip to be used with a gripper in transfer systems or robots that operate under dynamic motion, which in most cases aim at achieving its maximum cycle and therefore require stiffness, durability, stability, repeatability of functional positioning, while being as lightweight as possible to meet the capacity restrictions of the equipment to which it will be attached, without any vibrations associated with the maximum speed while in motion.

One object of the present invention is to provide a clip configured as an attachment element between components that require regulation for better adjusting the components and grip and release positions of workpieces.

One object of the present invention is to provide a clip having the functional characteristics of being easy to adjust, providing a firm fastening while being solid and maintaining firmness of position under the dynamics of operation for a great amount of cycles.

One object of the present invention is to provide a clip being structurally stiff, lightweight, flexible, easy to adjust and stable to keep the conditions under which it was set up for many cycles.

One object of the present invention is to provide a method of fastening a component using an adjustable clip.

### Brief Description of the Invention

The objects of the present invention are achieved by means of an adjustable clip comprising:
- two equal or very similar semi-clamps assembled as a mirror mount resulting in an "eyeglass" shape having two spherical cores (mouthpieces), into which fully or partially shaped components having spherical surface can be inserted either directly or using adapters;
- spherical adapters having an external surface that is partially or fully spherical, split or bipartite with an internal hole, which are used to allow the clips to clamp the element to be fastened;
- fastening elements, mainly screws, nuts and washers;
wherein the first semi-clamp and the second semi-clamp are configured to be positioned, in a way to tighten something in the spherical section, to each other at least by means of one or more fastening elements, in the configuration shown 3 sets (screw, nut and washer) and in another configuration shown 4 sets of fastening elements, so that in the configuration shown, it enables an adjustment to be made of one of the elements to be fastened with a pre-tightening of the central screw, then with a pre-tightening of the peripheral screw adjacent to the element being adjusted and fastened, then the process is repeated on the other element to be adjusted and fastened and then final sequence is concluded by re-tightening or strongly tightening all of the adjusted, tightened and fastened elements.

### Brief Description of the Drawings

The present invention will now be described in more detail based on one embodiment shown in the drawings. The figures show:
Figure 1 - is a possible configuration of the present invention of a complete grip assembly, model G shows a gripper having part of its body in spherical shape, not requiring the adjustment sphere and, model S is a shovel inserted in the adjustment sphere;
Figure 2 - is a predominant configuration of the clip presenting the assembly of two equal or similar semi-clamps assembled on opposite sides, having three aligned fastening screws with side access slots for the screws to facilitate the assembly and quick adjustment of the elements, while maintaining a central clamping spacing for and cores oriented in parallel, showing one core with a clamping sphere and another one without a sphere;
Figure 3 - is a clip configuration similar to figure 2, except that the semi-clamps are similar but not equal, as one of them has a thread for tightening the screw, and the other has a hole for the screw to pass through without the side slots and has spherical cores oriented in parallel;
Figure 4 - is a clip configuration for assembling elements not in parallel, but orthogonally, the two semi-clamps being similar to each other, but not equal as they are mirror images of each other, having side slots for the screws in which the spherical cores are orthogonal to each other;
Figure 5 - is a clip configuration for assembling elements not in parallel, but orthogonally, similarly to Fig. 4, but using three simpler screws that do not provide a very efficient fastening.
Figure 6 - is a configuration of the single-piece spherical adjusting core having a slot for enable adjustments;
Figure 7 - is a configuration of the spherical adjusting core as a bipartite part without a notch;
Figure 8 - is a configuration of the spherical adjusting core as a bipartite part with a notch.

### Detailed Description of the Figures

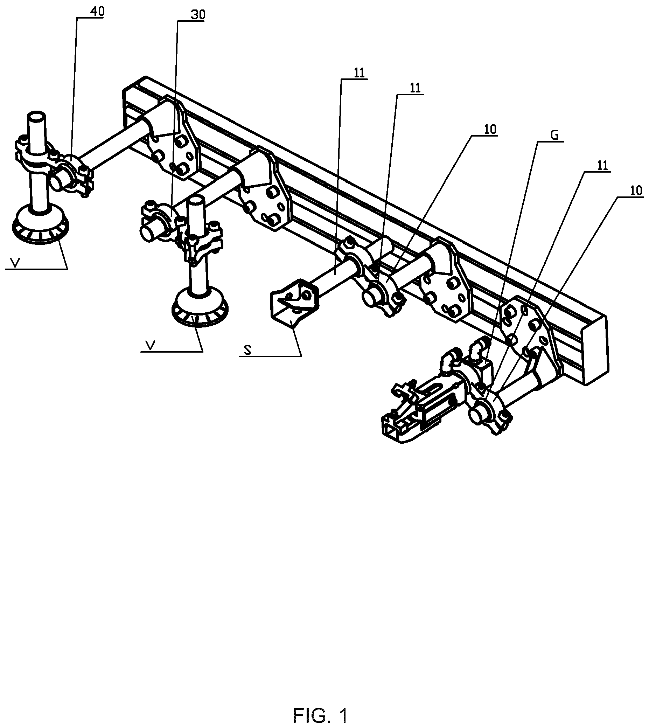

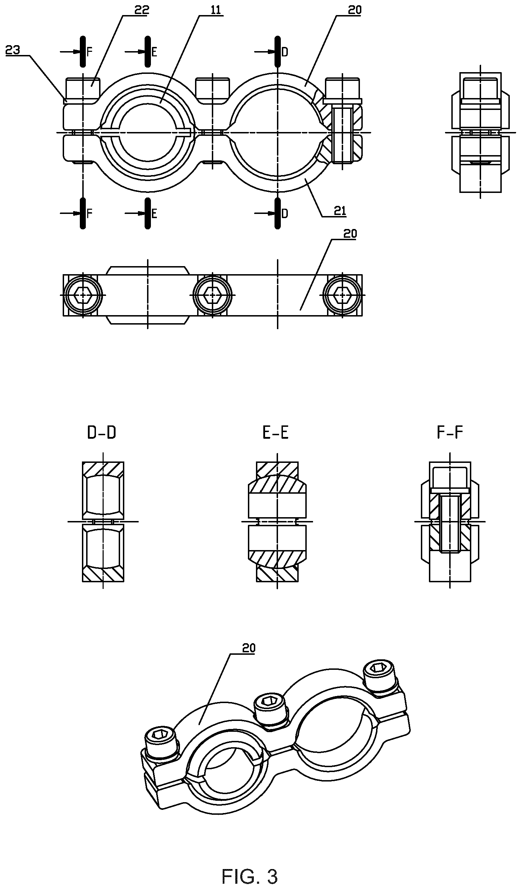

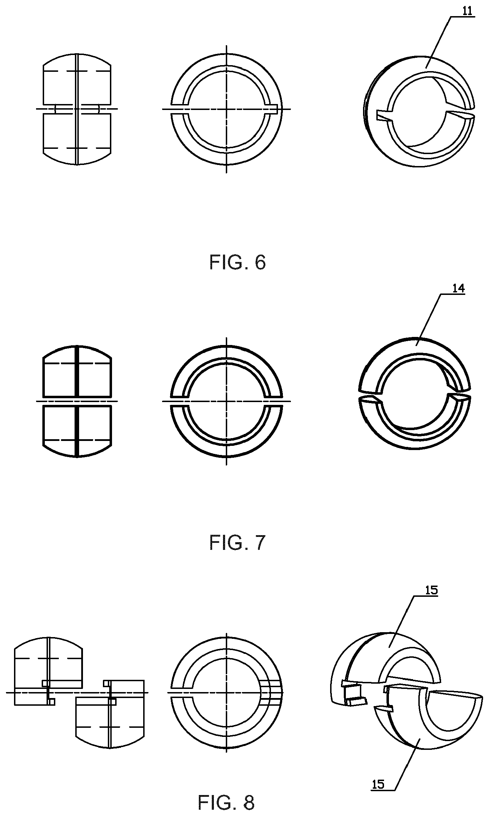

In principle, with initial reference to figures 1 to 8, the present invention relates to an adjustable clip. By adjustable clip is meant an assembly made by one of the following processes: casting, shaping, micromelting, molding, stamping, machining in general, etc. using, for example iron, aluminum or other metals, alloys and even polymers, for example.

However, although several processes can alternatively be used in the manufacture of the adjustable clip of the present invention, one of these alternatives is presented herein, namely, micromelting, which is preferable for giving the lowest cost for the instant production volumes; variation in the production volumes may define which processes are the most appropriate and preferred.

In general, the adjustable clip is configured to securely and precisely grab, hold, transport and position parts in a production or manufacturing process. From among these processes are for example the transport of parts in integrated stamping processes (shaping of metal parts), among others.

More specifically, the clips are developed and designed to receive and embody components used for grabbing and moving parts (assemblies) in processes, such as grippers, shovels, suction cups and other known assemblies in a system.

Various embodiments of clips to securely and precisely grab, hold, transport and position parts in a manufacturing process, or more specifically to transfer parts in an integrated process, for example, stamping (shaping of metal parts), from one process step to the subsequent one, for example, in an appropriate site of the type of tool, are known. Clips are developed and designed to receive and hold part gripping systems such as grippers, shovels, suction cups and other known known grip assemblies; however these assemblies need to be quickly and accurately adjusted to grab parts or other elements in the best way possible in a safe and precise dynamic transport condition at the maximum speed for the viable conditions of the manufacture process.

Figure 1 in particular shows possible applications of the present adjustable clip in transfer processes of a workpiece or an object, wherein the adjustable clip may be engaged to a grip component for transferring a part or object that can be, for example, a gripper, a shovel, or any other similar known component. Obviously, the component to be fastened, as exemplified herein, should not be understood as a limitation of the present invention, so that any components can eventually be adapted to be fastened by the proposed adjustable clip.

In the present invention, a structural configuration of the present adjustable clip basically comprises at least two semi-clamps 10 and fastening elements 12, 13.

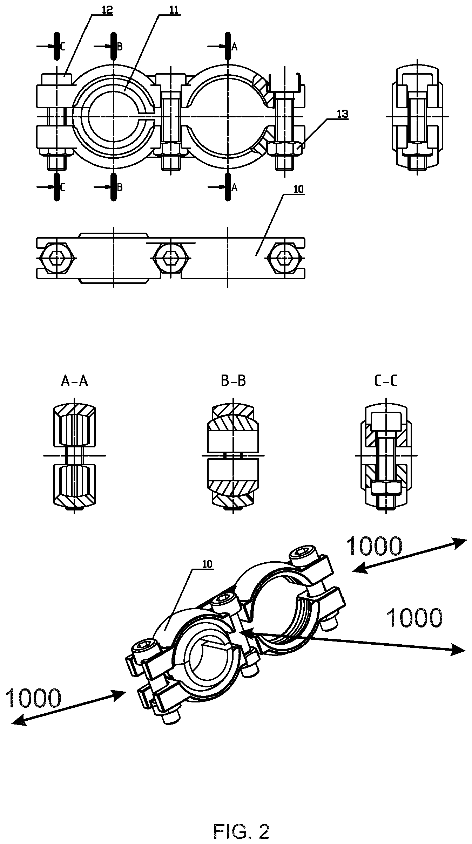

More specifically, one configuration of the present invention comprises a first semi-clamp 10 and a second semi-clamp 10 mounted on opposite sides as a mirror image so as to create two spherical cores, as shown especially in Figure 2. Thus, the adjustable clip mounted in this configuration is symmetrical with respect to the horizontal X-axis and symmetrical with respect to the vertical Z-axis.

The structural shape of the fastening clip includes two clamping semi-clamps 10 having spherical internal surfaces to fit a compatible spherical surface of a gripper-type component, or any other component having a spherical surface matching the spherical surface of the semi-clamps; if the component surface makes it impossible or difficult to have a spherical surface that matches the semi-clamps, then a ring-shaped adapter core is used, which has an external spherical surface matching those of the semi-clamps, wherein said core must have an internal surface of the most appropriate shape, such as tubular, billet or any other shape that would allow the component to be adjusted and fastened, as shown in figure 2; however in some applications this tube is too long and it is hard to remove the spherical core along the tube and in these instances a bipartite spherical core with or without a notch can be used.

Both semi-clamps 10 of the clip assembly are joined and secured by three screws 12 with their respective clamping and fastening nuts 13, one screw being placed at the center line between the two spherical surfaces and the other two at the two opposite ends of the semi-clamps. Even though it is possible to fasten the semi-clamps with 1, 2, or more screws 12, the ideal is to perform adjustments gradually; to this end, it is important and preferable that three screws 12 are used, which enables the adjustment of components from one side, then concluding with a pre-tightening of the two peripheral screws on that side, continuing by adjusting the components on the opposite side, after which a final tightening of all 3 screws 12 is performed.

The semi-clamps 10 are configured to be placed and pressed towards each other as a mirror image, resulting in an "eyeglass" shape and in a housing having a partially spherical surface, therefore, cooperating with each other for fastening, which is made by means of the fastening elements, screw 12 and nut 13, which may alternatively be clamps, fittings, etc. However, it should be noted that the type of fastening element 12, 13 is not a limitation of the present invention and can be configured in other ways that meet the fastening needs.

An innovative, useful and important feature of this invention are the housings for said screws 12 and nuts 13. The semi-clamps have side openings in the screw passage holes to allow the quick insertion and removal of screws through the clamp sides in a direction 1000; they are also very important since by enabling insertion by either sides, it will also allow them to be inserted pre-assembled; such slotted configuration also allows the screws and nuts to be inserted and placed in a more convenient way to facilitate adjustments and also in order to be within the reach of Allen keys or other type of key from the easiest side for tightening. To facilitate placement of the nuts, the semi-clamps have the housing where they will be placed in the shape of the nut, thus avoiding the use of a tightening wrench of the type known as ratcheting or spanner wrench etc. The use of Allen screws is the most appropriate and preferable as the screw head has smaller diameter than the matching nut, therefore, the nut housing can accommodate the screw head on either of the mounting sides of the screw. The design of the semi-clamp 10 was developed, and is exemplified herein, aiming at a micromelting manufacture process. This is the preferred process due to involving lower costs, however this same design can be used for a molding process with a plastic polymer having the adequate strength to the intended use. The basic design of the semi-clamp 10 can be slightly adapted for a machining process from an iron, aluminum or any other metal sheet or block. The spherical core can also be made of metal, plastic, other polymers or other materials compatible with use and being commercially available.

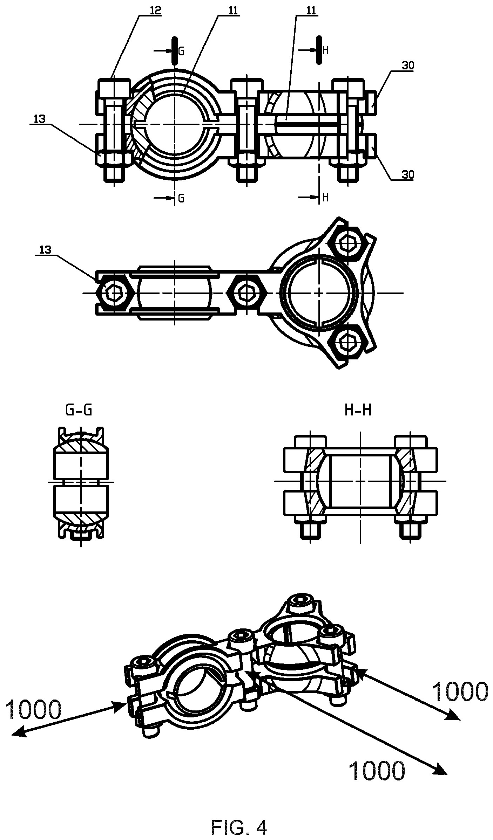

To meet certain grip conditions and provide greater flexibility and a degree of radial adjustment, another configuration is presented herein, in which the adjustable clip has spherical cores orthogonal to each other, as shown in figure 4.

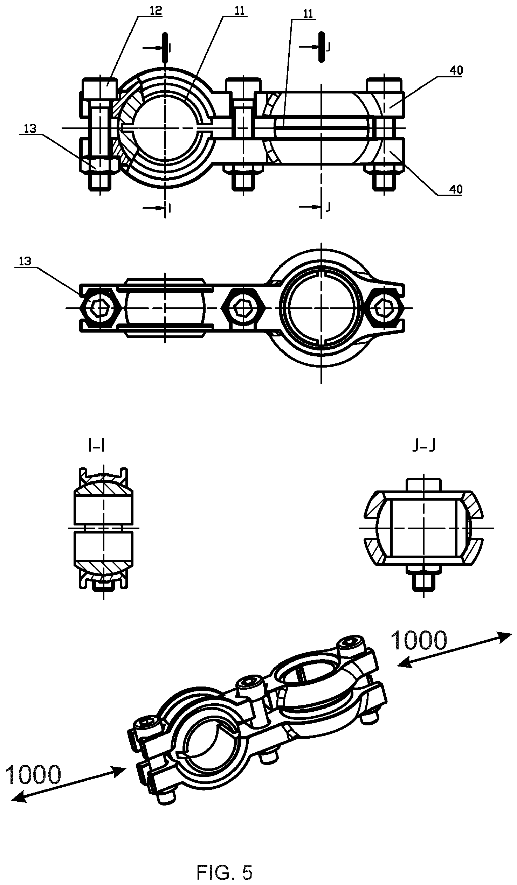

In another configuration, it should be noted that the adjustable clip has cores orthogonal to each other with three screws, as illustrated in particular in figure 5.

As an example, a configuration with four fastening means is shown in particular in figure 4. However, other configurations can also be implemented, as long as they are in accordance with the teachings of the present invention.

It should also be noted that the semi-clamps 10, and in particular the spherical cores can alternatively be made in other geometries, including a rectangular, triangular, tubular (cylindrical) profile or any geometric shape that meets the principles of the present invention, further comprising combinations with each of the cores of a different geometry.

External appearance of the mount fastening assembly can be of many shapes, but the current external appearance was chosen due to facilitating the conditions of adjustment and tightening, reducing weight while retaining stiffness.

The present invention further comprises a method of fastening a component by means of an adjustable clip.

It is therefore noted that the features of said adjustable clip described are compatible with the method that will be described below.

Regarding the method of fastening a component, it comprises a step of joining one semi-clamp to the other.

This step must be performed in such a way that said component is at least partially surrounded by the clamps, allowing them to attach to each other.

The present method of fastening the component is configured to comprise a step of inserting each fastening element 12, 13 into a respective slot.

To this end, the components of the adjustable clip are provided with the already described characteristics, such that the semi-clamps are joined at least by means of the fastening elements, the semi-clamps being cooperative with each other.

Advantageously, the present invention is configured in such a way that the slots allow one to laterally and frontally insert and remove the fastening elements towards a direction 1000, as already described.

The step of joining the semi-clamps to each other at least by means of the fastening elements is configured to form at least one core (mouthpiece) matching at least one component to be fastened.

Thus, one step of the present method comprises inserting the component to be fastened into the core (mouthpiece). If the component does not match the core, the present invention also provides for a step of inserting an adjustment sphere 11 into the core, wherein the adjustment sphere 11 is configured to allow the component to be fastened to the adjustable clip when said component a be fastened is not compatible with the core.

The adjustment sphere 11 is further configured to match at least the core and the component to be fastened, as already described in the present specification, and may also be configured as a bipartite sphere without a notch 14 or a bipartite sphere with a notch 15.

Presented and described here is an "eyeglass" clip assembly that uses semi-clamps to compress and secure a spherical surface of other components such as grippers etc. Although the embodiments and applications of the present invention have been shown and described herein, it is evident that many other configurations are possible without departing from the scope of the present invention.

It is presented a method of fastening the component that uses the clip of the present invention.

Having described a preferred embodiment of the present invention, it should be understood that the scope of the present invention encompasses other possible variations, being limited only by the content of the appended claims, including any possible equivalents thereof.

## Claims

1. An adjustable clip, **characterized in that** it comprises two semi-clamps (10) configured and mounted on opposite sides to result internally in a contact surface for fastening an element to be fastened, wherein the semi-clamps (10) are attached by means of fastening elements (12, 13), the fastening elements (12, 13) being inserted laterally and frontally towards a direction (1000) into openings.

2. The adjustable clip, according to claim 1, **characterized in that** an adjustment sphere (11) is configured to enable fastening and adjustment of a non-spherical element, wherein the adjustment sphere (11) can be configured as a bipartite sphere without a notch (14) or a bipartite sphere with a notch (15).

3. The adjustable clip, according to claim 2, **characterized in that** the openings are arranged at ends and in the central region of the semi-clamps (10) and are configured to facilitate the removal and fastening adjustment of the components inserted in the clip.

4. The adjustable clip, according to claim 3, **characterized in that** the semi-clamps have in the seat region of the fastening elements (12, 13) a housing with a suitable configuration to loosely fit the nut or the screw head, which can be inserted and mounted by either sides.

5. The adjustable clip, according to claim 4, **characterized in that** the adjustment sphere (11) is a single piece with opening(s) configured to be flexed and allow a spherical element to be clamped.

6. The adjustable clip, according to claim 5, **characterized in that** the adjustment sphere (11) has grooves on the side opposite to the opening to reduce the flexural strength.

7. The adjustable clip, according to claim 6, **characterized in that** the adjustment sphere (11) is bipartite to facilitate removal or assembly thereof without the need to remove it from the entire tubular rod.

8. The adjustable clip, according to claim 7, **characterized in that** the adjustment sphere (11) is bipartite to facilitate removal or assembly thereof without the need to remove it from the entire tubular rod, wherein the adjustment sphere (11) has a fastening notch.

9. The adjustable clip, according to claim 1, **characterized in that** two clip mouthpieces are configured orthogonally for positioning, adjusting and fastening elements placed orthogonally.

10. The adjustable clip, according to claim 9, **characterized in that** the two clip mouthpieces are configured orthogonally with a suitable configuration to secure the semi-clamps using three screws.

11. The adjustable clip, according to claim 9, **characterized in that** the two clip mouthpieces are configured orthogonally with a suitable configuration to secure the semi-clamps with four or more screws.

12. Method of fastening a component by means of an adjustable clip, the adjustable clip comprising two semi-clamps (10) and fastening elements (12, 13), the method of fastening a component comprising the steps of:
- joining the semi-clamps (10) to each other,
and being **characterized in that** it further comprises a step of inserting each fastening element (12, 13) into openings, wherein insertion of the fastening element (12, 13) into openings is carried out laterally and frontally towards direction (1000) of the adjustable clip.

13. The method of fastening a component according to claim 12, **characterized in that** the semi-clamps (10) are joined at least by means of fastening elements (12, 13), the semi-clamps (10) being cooperative with each other, wherein each semi-clamp (10) has openings at each end thereof.

14. The method of fastening a component according to claim 13, **characterized in that** it further comprises a step of inserting the component to be fastened into mouthpieces.

15. The method of fastening a component according to claim 14, **characterized in that** it further comprises a step of inserting an adjustment sphere (11), wherein the adjustment sphere (11) is configured to allow the component to be fastened to the adjustable clip when the component to be fastened does not match the mouthpieces when said adjustable clip is used, wherein the adjustment sphere (11) is further configured to be compatible at least with the adjustable clip and the component to be fastened.

16. The method of fastening a component according to claim 15, **characterized in that** the adjustment sphere (11) is a single piece with opening(s) configured to be flexed and allow a spherical element to be clamped.

17. The method of fastening a component according to claim 16, **characterized in that** the adjustment sphere (11) has grooves on the side opposite the opening to reduce the flexural strength.

18. The method of fastening a component according to claim 17, **characterized in that** the adjustment sphere (11) is bipartite to facilitate removal or assembly thereof without the need to remove it from the entire tubular rod.
